# EUROPEAN PATENT SPECIFICATION

(11) **EP 3 790 598 B1**
(45) Date of publication and mention of the grant of the patent: **07.10.2026**
(21) Application number: 19799348.8
(22) Date of filing: 08.05.2019
(51) Int. Cl.: A61L 9/12, A01M 1/02, A01M 1/10, A01N 25/18, A01N 35/02, A01N 41/12

(54) **CHEMICAL DISPENSER**
CHEMISCHER SPENDER
DISTRIBUTEUR DE PRODUITS CHIMIQUES

(30) Priority: 08.05.2018 US 201862668749 P; 26.04.2019 US 201962839141 P
(43) Date of publication of application: 17.03.2021
(73) Proprietor: Trece, Inc., Menlo Park, CA 94025 (US)
(72) Inventor: CHEBNY, Vincent James, Menlo Park, California 94025 (US)
(74) Representative: Murgitroyd & Company
(86) International application number: PCT/US2019/031386
(87) International publication number: WO 2019/217594

(56) References cited:
- EP-B2- 0 645 081
- WO-A1-2019/217594
- US-A- 5 455 043
- US-A- 5 497 942
- US-A- 5 497 942
- US-A1- 2006 233 700
- US-A1- 2010 319 249
- US-A1- 2015 068 611
- US-A1- 2018 014 524
- DELMELLE, R ET AL.: "Promotion of Hydrogen Desorption from Palladium Surfaces by Fluoropolymer Coating", CHEMCATCHEM, vol. 8, no. 9, 9 April 2016 (2016-04-09), pages 1646 - 1650, XP055651091
- ISLAM, MA ET AL.: "Assessment of thickness-dependent gas permeability of polymer membranes", INDIAN JOURNAL OF CHEMICAL TECHNOLOGY, vol. 12, January 2005 (2005-01-01), pages 88 - 92, XP055651093

## Description

### CROSS-REFERENCE TO RELATED APPLICATIONS

This application claims priority and benefit of U.S. provisional patent applications Ser. Nos. 62/668,749 filed May 8, 2018 and 62,839,141 filed April 26, 2019.

### BACKGROUND

### Field of the invention

The invention is in the field of insect control and more specifically in the field of chemical dispenser systems for insect control.

### Related Art

Multi-component dispensers for pest control compounds are known. See, for example, U.S. non-provisional patent application Ser. No. 15/547,785 filed July 31, 2017. In a typical use, active compounds are disposed in a support matrix and their release into the environment is limited by a diffusion membrane. Compounds must diffuse through the diffusion membrane in order to be released. Their release rate is, therefore, often limited by the rate of diffusion through the diffusion membrane. As a result, larger molecules may be released at substantially lower rates then smaller molecules.
EP0645081A1 discloses a device useful for insecticidal and/or repellent treatments against insects in the field of human habitations, and more particularly useful for treating confined spaces against moths.
US5455043A discloses a controlled release device useful for the release of vapors or liquids to the surrounding of the user is described.

### SUMMARY

The invention is set-up in the appended claims. A multi-layer dispenser system includes a perforated membrane configured to control release of one or more compounds from a dispenser. The membrane is optionally configured to modify the relative release rates of low and high volatility compounds so as to achieve a desirable ratio of release rates between these compounds. Use of the perforated membrane results in release rates that are more dependent on 1) relative volatilities of the compound and/or 2) diffusion rates through their support matrix, rather than their relative diffusion rates through a diffusion membrane. The desirable ratio optionally results in a greater time period of simultaneous effective release of the compounds as compared to undesirable rations of release rates.

The multiple compounds are optionally selected to attract and/or disrupt the mating of spotted wing drosophila, i.e., *Drosophila suzukii* and the dispenser may be disposed in a trap configured to capture this insect.

The dispenser includes
an active layer (110) including a diffusion material, a first compound, and a second compound, wherein the first and second compounds can diffuse through the diffusion material to desorb (240) into the atmosphere, the first compound being more volatile than the second compound; and
a backing layer configured to support the active layer; and
a perforated membrane (130) configured to control release rates of the first and second compounds from the active layer such that the release rate of the first compound is reduced by the membrane by a greater percentage than the release rate of the second compound is reduced by the membrane, characterised by the fact that,
the perforated membrane (130) includes perforations between 50 and 250 micrometers in diameter; and
the perforations of the perforated membrane (130) occupy between 1%, and 10% of a surface of the perforated membrane, the active layer being disposed between the backing layer and the perforated membrane.

Various embodiments include a method of attracting insects of the genus *Drosophila,* the method comprising: depositing a plurality of compounds in a diffusion material, the plurality of compounds including at least a first compound and a second compound, the first compound having a greater volatility than the second compound; attaching a backing layer to the diffusion material; and attaching a membrane to the diffusion material, the membrane including perforations configured to control release rates of the first and second compounds such that the release rate of the first compound is reduced by the membrane by a greater amount than the release rate of the second compound, the diffusion material being disposed between the backing layer and the membrane. Optionally, the release rates of the first and second compounds are primarily dependent on their desorption rates from the diffusion material to the atmosphere.

### BRIEF DESCRIPTION OF THE DRAWINGS

FIG. 1 illustrates an exploded view of a dispenser system, according to various embodiments of the invention.
FIG. 2 illustrates release of compounds from an active layer through a perforated membrane, according to various embodiments of the invention.
FIG. 3 illustrates a front view of a dispenser system, according to various embodiments of the invention.
FIG. 4 illustrates a dispenser system disposed within an insect trap, according to various embodiments of the invention.
FIG. 5 illustrates methods of constructing an insect trap, according to various embodiments of the invention.

### DETAILED DESCRIPTION

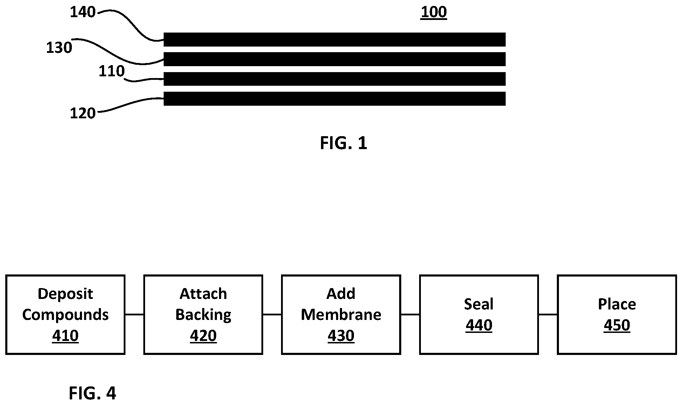

FIG. 1 illustrates an exploded view of a Dispenser System 100, according to various embodiments of the invention. Dispenser System 100 includes an Active Layer 110, an optional Backing Layer 120, a Perforated Membrane 130 and an optional Sealing Layer 140. Dispenser System 100 is optionally disposed within an insect trap. While FIG. 1 illustrates an exploded view, normally the various layers are in contact with each other, to form a single multi-layer device. For example, the various layers illustrated may be attached via an adhesive and/or intermediate layer.

Active layer 110 is configured to release at least a first compound and optionally a second compound or further compounds of different volatilities. For example, the first compound may be more volatile than the second compound. Active Layer 110 can include two or more active compounds including, for example, Acetoin, Methionol, Ethanol, Acetic Acid, any of the compounds disclosed in US patent applications 15/730,412, 15/547,785, 15/596,418, 62/570,809, 62/406,811, 62,839,141 and/or any other compounds known to kill insects, attract insects and/or disrupt insect mating. The compounds within Active Layer 110 are optionally configured to attract and/or disrupt the mating of spotted wing drosophila (*Drosophila suzukii*). Active Layer 110 optionally includes on or more of methanol, acetalaldehyde, ethyl acetate, alpha pinene and phenyl propionate.

In various embodiments, Active Layer 110 includes an active agent mixture of any combination of at least one, two, three or four of Acetoin, Methionol, Ethanol and Acetic Acid. Active Layer 110 also typically includes a thickening agent such as Klucel H IND hydroxypropylcellulose. Alternative thickening agents include: Methylcellulose, Hydroxylethylcellulose, Xanthan Gum, Locust bean gum, Gelatin, Carbomer, Polyvinyl alcohol and/or Sodium alginate. These thickening agents may form a gel including the active agent mixture. In various embodiments Active Layer 110 includes cotton, cellulose, silica, diatomaceous earth, plastics, and/or the like. Active Layer 110 can include 1, 2, 3, 4 or more compounds selected for insect control. Active Layer 110 typically includes a diffusion material through which these compounds can diffuse, and from which they may desorb into the atmosphere.

Optionally, different components of the active mixture are disposed in different regions of Active Layer 110. For example, Acetic Acid may be disposed in a first area of Active Layer 110 while Acetoin and/or Methional are disposed in a second area of Active Layer 110.

Backing Layer 120 is configured to support Active Layer 110. In some embodiments Backing Layer 120 includes an Aluminum/poly chemical barrier plastic membrane. Alternatively, Backing Layer 120 can include any chemical barrier plastic. Depending on the material, Backing Layer 120 can have a thickness of less than 1 mil, between 1 mil and 25 mil, or greater than 25 mil.

Perforated Membrane 130 is configured to control release rates of the one, two or more compounds via perforations in Perforated Membrane 130. Using Perforated Membrane 130 release rates of compounds are dependent on desorption rates of the compounds from Active Layer 110 and/or diffusion rates of the compounds within Active Layer 110, rather than diffusion rates of the compounds through a solid portion of Perforated Membrane 130 or other rate limiting membrane. Thus, Perforated Membrane 130 allows for control of release rates while allowing relative release rates to be dependent on desorption rates from Active Layer 110 rather than on diffusion rates through a diffusion membrane separate from Active Layer 110. For example, in some embodiments, Perforated Membrane 130 is configured (via material, thickness, perforation density and perforation size) such that the release rate of a first compound is changed by a greater percentage and/or absolute amount than the release rate of a second compound, relative to their release rates through a diffusion membrane or their release rates without a rate limiting membrane. By changing the release rate of the more volatile compound(s) by a different factor and/or amount than the release rate of the less volatile compound(s), it is possible to arrange for release of all the compounds over an extended period of time, e.g., at least ½, 1, 2, 3, 4 or 5 weeks, or at least 1, 2, 3 or 4 months.

Perforated Membrane 130 includes a 3 mil Polyethylene sheet including perforations that between 50 and 250 micrometers in diameter. The perforations can cover between 1%and 10 of the surface of the membrane. In various embodiments, Perforated Membrane is less than 1 mil, between 1 and 10 mil, between 10 and 25 mil, or greater than 25 mil in thickness. In various embodiments, Perforated Membrane 130 can include other plastics such as: Polyamides (PA), Polycarbonate (PC), Polyester (PES), Polyethylene (PE), High-density polyethylene (HDPE), Low-density polyethylene (LDPE), Polyethylene terephthalate (PET), Polypropylene (PP), Polystyrene (PS), High impact polystyrene (HIPS), Polyurethanes (PU), Polyvinyl chloride (PVC), Polyvinylidene chloride (PVDC), Acrylonitrile butadiene styrene (ABS), Polycarbonate/Acrylonitrile Butadiene Styrene (PC/ABS), Polyethylene/Acrylonitrile Butadiene Styrene (PE/ABS), Polyepoxide (epoxy) Polymethyl methacrylate (PMMA), Polytetrafluoroethylene (PTFE), Phenolics or phenol formaldehyde (PF), Melamine formaldehyde (MF) Urea-formaldehyde (UF), Polyetheretherketone (PEEK), Polyetherimide (PEI), Polyimide Plastarch material Polylactic acid (PLA), Furan Silicone Polysulfone, and/or the like.

Sealing Layer 140 is configured to prevent release of the first and second compounds (or other compounds within Active Layer 110) until Sealing Layer 140 is removed. Typically, Sealing Layer 140 is removed when Dispensing Device 100 is place in use, e.g., in a field or orchard. In some embodiments, Sealing Layer 140 includes a peelable aluminum/poly layer around 6 mil thick. Alternatively, Sealing Layer 140 can include any plastic chemical barrier, nylon, pvdc, and/or the like.

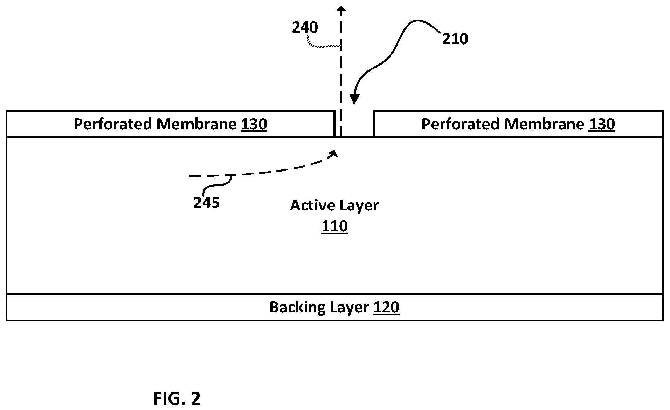

FIG. 2 illustrates release of compounds from an active layer through a perforated membrane, according to various embodiments of the invention. Active compounds can Desorb 240 from Active Layer 110 via Pore 210 and be released into the atmosphere. They can also Diffuse 245 through Active Layer 110 to reach Pore 210. In various embodiments, the release rate of active compounds from Active Layer 110 to the atmosphere via Pore 210 is at least 100, 1000 or 10,000 times greater than release via diffusion through solid parts of Perforated Membrane 130. The release rates of active compounds are thus primarily dependent on rates of Desorption 240 and/or Diffusion 245. At the same time, the presence of Perforated Membrane 130 reduces overall release rates (relative to having no release limiting membrane) such that release periods are extended to commercially viable times.

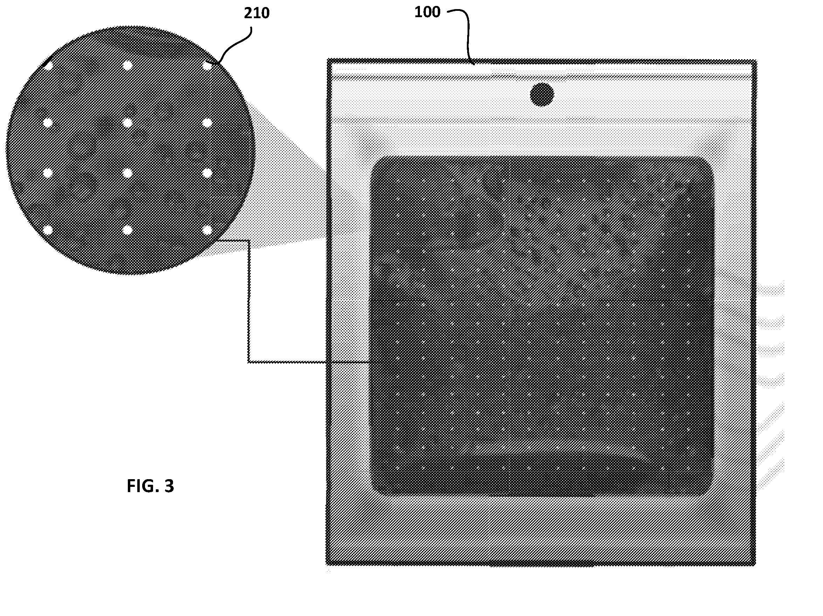

FIG. 3 illustrates a front view of Dispenser System 100 (without Sealing Layer 140), according to various embodiments of the invention. Included in FIG. 3 is a magnified view of a regions in which Pores 210 can be seen. In alternative embodiments, Dispenser System 100 can take a wide variety of shapes and sizes.

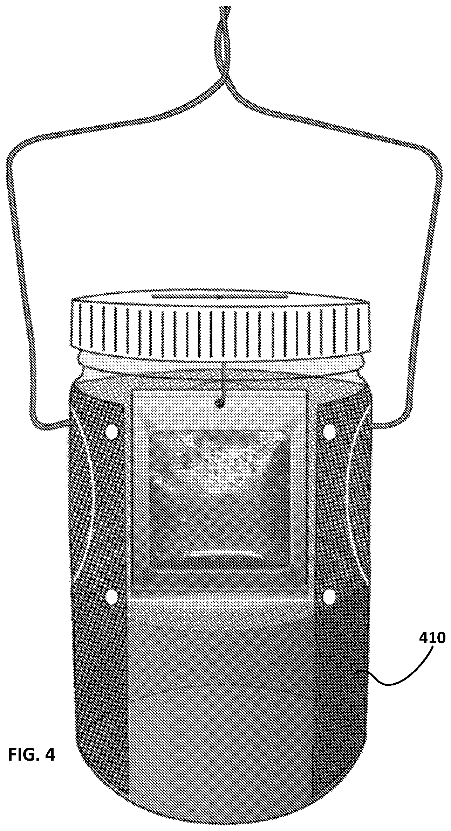

FIG. 4 illustrates a dispenser system disposed within an insect Trap 410, according to various embodiments of the invention. Trap 410 may be hung from a tree or placed on a surface. Trap 410 is optionally configured to trap *Drosophila suzukii*.

FIG. 5 illustrates methods of constructing an insect lure and trap, according to various embodiments of the invention. In a Deposit Compounds Step 410, one or more compounds are deposited or mixed in a diffusion material, such as Active Layer 110. The one or more compounds optionally including at least a first compound and a second compound, the first compound having a greater volatility than the second compound. The one or more compounds can include, for example 1, 2, 3, 4 or more compounds configured to attract and/or disrupt mating of insects of the genus Drosophila. In one example the compounds includes Acetoin, Methionol, Ethanol and Acetic Acid. The compounds deposited in Deposit Compounds Step 410 can include any of the compounds disclosed in US patent applications 15/730,412, 15/547,785, 15/596,418, 62/570,809, 62/406,811, 62,839,141 and/or any other compounds known to attract insects and/or disrupt insect mating.

In an optional, Attach Backing Step 420, a backing is attached to the diffusion material. This backing is configured to support the diffusion material. Attach Backing Step 420 is optional, which is not claimed, in embodiments wherein the diffusion material is self supporting. In these embodiments, Backing Layer 120 is optional and Perforated Membrane 130 may be placed on two sides of Active Layer 110. Backing Layer 120 may also be optional if diffusion material is of a shape, e.g., cylindrical that can be completely covered by membrane such as a single Perforated Membrane 130.

In an Add Membrane Step 430, a perforated membrane, e.g., Perforated Membrane 130, is attached to the Active Layer 110. As discussed elsewhere herein, the perforated membrane includes perforations configured to control release rates of 1, 2, 3, 4 or more compounds. In some embodiments, the perforations of the perforated membrane are configured such that the release rate of a first compound is reduced by the membrane by a greater amount and/or percentage than the release rate of a second compound. The perforated membrane is optionally added such that the diffusion material is between the backing layer and the perforated membrane, or such that the diffusion material is covered by the perforated membrane. Release rates of the compounds from the diffusion material are primarily dependent on desorption rates of the compounds from the diffusion material to the atmosphere, and/or primarily dependent on diffusion rates of the compounds within the diffusion material.

In an optional Seal Step 440, a removable seal, e.g. Seal Layer 140 is placed over the perforated membrane. The sealing layer is configured to prevent the active compounds with the Active Layer 110 from releasing to the atmosphere before the seal is removed.

In an optional Place Step 450, the seal is removed and the active material and perforated membrane are placed in an insect trap. The insect trap is optionally configured to trap insects of the genus *Drosophila,* e.g., *Drosophila suzukii*.

Several embodiments are specifically illustrated and/or described herein. However, it will be appreciated that modifications and variations are covered by the above teachings. For example, the systems and methods disclosed herein can be used in conjunction with a wide range of compounds configured to control one or more of a wide range of insects.

The embodiments discussed herein are illustrative of the present invention.

## Claims

1. A chemical dispenser (100) comprising:
an active layer (110) including a diffusion material, a first compound, and a second compound, wherein the first and second compounds can diffuse through the diffusion material to desorb (240) into the atmosphere, the first compound being more volatile than the second compound; and
a backing layer (120) configured to support the active layer; and
a perforated membrane (130) configured to control release rates of the first and second compounds from the active layer such that the release rate of the first compound is reduced by the membrane by a greater percentage than the release rate of the second compound is reduced by the membrane, **characterised by** the fact that,
the perforated membrane (130) includes perforations (210) between 50 and 250 micrometers in diameter; and
the perforations of the perforated membrane (130) occupy between 1% and 10% of a surface of the perforated membrane, the active layer being disposed between the backing layer and the perforated membrane.

2. The dispenser (100) according to claim 1, wherein release of the first compound is reduced by the membrane by a greater amount than the release rate of the second compound is reduced by the membrane.

3. The dispenser (100) according to any one of claims 1-2, wherein the release rate of the first compound is independent of a diffusion rate of the first compound through a solid portion of the perforated membrane (130).

4. The dispenser (100) according to any one of claims 1-3, wherein the second compound includes acetoin and/or Methionol.

5. The dispenser (100) according to any one of claims 1-4, wherein the active layer (110) includes a thickening agent.

6. The dispenser (100) according to any one of claims 1-5, wherein the perforated membrane (130) includes polyethylene.

7. The dispenser (100) according to any one of claims 1-6, wherein the first or second compound is configured to attract spotted wing drosophila (*Drosophila suzukii*).

8. The dispenser (100) according to any one of claims 1-7, wherein the first or second compound is configured to disrupt spotted wing drosophila (*Drosophila suzukii*) mating.

9. The dispenser (100) according to any one of claims 1-8, further comprising a sealing layer (140) configured to prevent release of the first and second compounds from the dispenser, the perforated membrane (130) being disposed between the sealing layer (140) and the active layer (110).

10. Insect trap (410) comprising a dispenser (100) according to anyone of claims 1-9.

11. The dispenser (100) according to claims 1-9, wherein the first compound includes acetic acid and/or ethanol.

## Patentansprüche

1. Ein Chemikalienspender (100), der Folgendes beinhaltet:
eine aktive Schicht (110), die ein Diffusionsmaterial, eine erste Verbindung und eine zweite Verbindung umfasst, wobei die erste und die zweite Verbindung durch das Diffusionsmaterial diffundieren können, um in die Atmosphäre zu desorbieren (240), wobei die erste Verbindung flüchtiger als die zweite Verbindung ist; und
eine Trägerschicht (120), die konfiguriert ist, um die aktive Schicht zu stützen; und
eine perforierte Membran (130), die konfiguriert ist, um Freisetzungsraten der ersten und der zweiten Verbindung aus der aktiven Schicht zu steuern, sodass die Freisetzungsrate der ersten Verbindung durch die Membran um einen größeren Prozentsatz reduziert wird als die Freisetzungsrate der zweiten Verbindung durch die Membran reduziert wird, **dadurch gekennzeichnet, dass**
die perforierte Membran (130) Perforationen (210) mit einem Durchmesser zwischen 50 und 250 Mikrometern umfasst; und
die Perforationen der perforierten Membran (130) zwischen 1 % und 10 % einer Oberfläche der perforierten Membran einnehmen, wobei die aktive Schicht zwischen der Trägerschicht und der perforierten Membran angeordnet ist.

2. Spender (100) gemäß Anspruch 1, wobei die Freisetzung der ersten Verbindung durch die Membran um einen größeren Betrag reduziert wird als die Freisetzungsrate der zweiten Verbindung durch die Membran reduziert wird.

3. Spender (100) gemäß einem der Ansprüche 1-2, wobei die Freisetzungsrate der ersten Verbindung unabhängig von einer Diffusionsrate der ersten Verbindung durch einen festen Abschnitt der perforierten Membran (130) ist.

4. Spender (100) gemäß einem der Ansprüche 1-3, wobei die zweite Verbindung Acetoin und/oder Methionol umfasst.

5. Spender (100) gemäß einem der Ansprüche 1-4, wobei die aktive Schicht (110) ein Verdickungsmittel umfasst.

6. Spender (100) gemäß einem der Ansprüche 1-5, wobei die perforierte Membran (130) Polyethylen umfasst.

7. Spender (100) gemäß einem der Ansprüche 1-6, wobei die erste oder die zweite Verbindung konfiguriert ist, um die Kirschessigfliege (*Drosophila suzukii*) anzulocken.

8. Spender (100) gemäß einem der Ansprüche 1-7, wobei die erste oder die zweite Verbindung konfiguriert ist, um die Paarung der Kirschessigfliege (*Drosophila suzukii*) zu stören.

9. Spender (100) gemäß einem der Ansprüche 1-8, der ferner eine Verschlussschicht (140) beinhaltet, die konfiguriert ist, um die Freisetzung der ersten und der zweiten Verbindung aus dem Spender zu verhindern, wobei die perforierte Membran (130) zwischen der Verschlussschicht (140) und der aktiven Schicht (110) angeordnet ist.

10. Eine Insektenfalle (410), die einen Spender (100) gemäß einem der Ansprüche 1-9 beinhaltet.

11. Spender (100) gemäß den Ansprüchen 1-9, wobei die erste Verbindung Essigsäure und/oder Ethanol umfasst.

## Revendications

1. Un distributeur de produit chimique (100) comprenant :
une couche active (110) incluant un matériau de diffusion, un premier composé, et un deuxième composé, dans lequel les premier et deuxième composés peuvent se diffuser à travers le matériau de diffusion pour se désorber (240) dans l'atmosphère, le premier composé étant plus volatil que le deuxième composé ; et
une couche support (120) configurée pour soutenir la couche active ; et
une membrane perforée (130) configurée pour contrôler les taux de libération des premier et deuxième composés à partir de la couche active de telle sorte que le taux de libération du premier composé est réduit par la membrane d'un pourcentage plus grand que le taux de libération du deuxième composé n'est réduit par la membrane,
**caractérisé par le fait que**,
la membrane perforée (130) inclut des perforations (210) ayant un diamètre compris entre 50 et 250 micromètres ; et
les perforations de la membrane perforée (130) occupent entre 1 % et 10 % d'une surface de la membrane perforée, la couche active étant disposée entre la couche support et la membrane perforée.

2. Le distributeur (100) selon la revendication 1, dans lequel la libération du premier composé est réduite par la membrane dans une plus grande mesure que le taux de libération du deuxième composé n'est réduit par la membrane.

3. Le distributeur (100) selon l'une quelconque des revendications 1 à 2, dans lequel le taux de libération du premier composé est indépendant d'un taux de diffusion du premier composé à travers une portion solide de la membrane perforée (130).

4. Le distributeur (100) selon l'une quelconque des revendications 1 à 3, dans lequel le deuxième composé inclut de l'acétoïne et/ou du méthionol.

5. Le distributeur (100) selon l'une quelconque des revendications 1 à 4, dans lequel la couche active (110) inclut un agent épaississant.

6. Le distributeur (100) selon l'une quelconque des revendications 1 à 5, dans lequel la membrane perforée (130) inclut du polyéthylène.

7. Le distributeur (100) selon l'une quelconque des revendications 1 à 6, dans lequel le premier ou le deuxième composé est configuré pour attirer les drosophiles à ailes tachetées (*Drosophila suzukii*).

8. Le distributeur (100) selon l'une quelconque des revendications 1 à 7, dans lequel le premier ou le deuxième composé est configuré pour perturber l'accouplement des drosophiles à ailes tachetées (*Drosophila suzukii*).

9. Le distributeur (100) selon l'une quelconque des revendications 1 à 8, comprenant en outre une couche d'étanchéité (140) configurée pour empêcher la libération des premier et deuxième composés à partir du distributeur, la membrane perforée (130) étant disposée entre la couche d'étanchéité (140) et la couche active (110).

10. Piège à insectes (410) comprenant un distributeur (100) selon l'une quelconque des revendications 1 à 9.

11. Le distributeur (100) selon les revendications 1 à 9, dans lequel le premier composé inclut de l'acide acétique et/ou de l'éthanol.
